# EUROPEAN PATENT APPLICATION

(11) **EP 1 184 061 A1**
(43) Date of publication of application: **06.03.2002**
(21) Application number: 01118735.8
(22) Date of filing: 06.08.2001
(51) Int. Cl.: A63F 13/12

(54) **Game item providing system, method and computer data signal**

(30) Priority: 09.08.2000 JP 2000241456
(71) Applicant: Konami Corporation, Minato-ku, Tokyo (JP)
(72) Inventor: Yamada, Nobuhiro, Shibuya-ku, Tokyo (JP)
(74) Representative: VOSSIUS & PARTNER

(57) **Abstract**

When a video game device sends a request of adding of an item used in a game to an item providing server connected to the video game device via a public network 520 or the Internet in response to user's operation, the item providing server selects an item among unusable items and sends item update information including an address of a flag corresponding to the selected item to the video game device. Then the video game device receives the item update information and changes a value of the flag identified by the address in the information from "zero" to "one", thereby a game program loaded in the video game device can use an item corresponding to the changed flag as a new item in the game.

## Description

The invention relates to a system, a method, and a computer data signal, for adding a game item by using a communication function of a portable video game device at a specific location such as a game device store.

In recent years, video game devices have spread to many families quickly. And there are various types of video games, such as a role-playing game, a simulation game, a combat game, a puzzle game, and the like. Therefore, many storage mediums each of which includes a software program which can execute one of these games are available in store. Such a video game has been often played in a home video game device displaying game images on a home television monitor.

However, a portable video game device which can execute the video games and includes a display device and a controller is recently on sale.

At present, the portable video game device may be classified into two types. One is a portable device which is capable of downloading a program and data from a home video game device (that is, a base video game device) connected to the portable device, and playing a game taking over contents of the game played in the base video game device.

The other is a completely independent portable device. A program and data which are used in the independent portable device are in store in the form of a cartridge incorporated into the device for each game. Also, there may be a dedicated game devise which is produced with fixed hardware and software to play a specific game.

Hereinafter, the former portable video game device is referred to as "dependent type portable video game device", the later portable video game device is referred to as "independent type portable video game device". Further, "portable video game device" means the both types of portable devices.

Such a portable video game device is easily carried outdoors differently from a home video game device, therefore, has a function taking advantage of the features. For example, most of a current portable video game devices can communicate by using an infrared communication function or a communication cable. Thereby, a plurality of portable video game devices can exchange game characters (items) having a predetermined ability or perform real-time battle in a game.

By using the communication function, for example, when a card game is played at two portable video game devices, a card (item) having a strong ability stored in a first cartridge of one portable video game device can be copied to a second cartridge of the other portable video game device, or exchanged for (or traded with) another card stored in the second cartridge of the other portable video game device. Therefore, a game player can obtain a card which is originally not his/her card and use the card in a game.

However, when items or cards used in a game are copied or exchanged, the number of the items and the number of types of the items are inevitably limited.

Also, the applicant proposed a video game device which can add an item such as a card used in a card game when a signal is received from a remote controller of a home electronic equipment such as a television set, and can store the item in a storage device of the video game device so as to use the item later in the card game. The proposed video game device is disclosed in Japanese Laid Open Publication No. 2001-029661.

However, the number of types of the added items is limited since the number of types of the remote controllers of the home electronic equipment.

Therefore, a game player of a game can freely add some items as items used in the game at the beginning. But, after playing the game several times, new items are not added in the game, as a result, the game player continues to see only usual and routine cards in the game. Consequently, the game loses its freshness and the game player quickly loses interest in the game.

It is therefore an object of the invention to provide a game item providing system which adds a game item based on an instruction of a game player via a network.

Also, it is an object of the invention to provide a game item providing system which controls so that the game item is added when a consideration is paid.

Furthermore, it is an object of the invention to provide a game item providing system which controls so that a condition to select the added game item is determined randomly or based on other elements such as a current season, a current time, or a serial number of a video game device.

According to a first aspect of the invention, there is provided a game item providing system. The system comprises a video game device which sends a request of addition of an item used in a game in response to an operation of a user, a memory unit which stores a program and data used in the game and which is held by the video game device, and an item providing server which receives the request of addition of an item from the video game device and sends to the video game device item update information identifying a unusable item to be changed to a usable item.

According to a second aspect of the invention, there is provided a video game device which comprises a memory unit which stores a program and data of a game, an item request unit which sends a request of addition of an item used in the game, an item information receiving unit which receives item update information which is sent in response to the request of addition of the item and identifies a unusable item to be changed to a usable item, and a data update unit which changes the unusable item identified by the item update information to the usable item.

According to a third aspect of the invention, there is provided an item providing server which comprises an item request receiving unit which receives a request of addition of an item used in a game, and an item information sending unit which sends item update information which identifies a unusable item to be changed to a usable item, in response to the request of addition of the item.

According to a fourth aspect of the invention, there is provided a game item providing method. The method comprises the steps of sending a request of addition of an item used in a game at a video game device, receiving the request of addition of the item at an item providing server connected to the video game device via a network, sending item update information which identifies a unusable item to be changed to a usable item in response to the request of addition of the item, at the item providing server, receiving the item update information at the video game device, and updating data used by a game program so as to be able to use the unusable item in the game based on the contents of the item update information, at the video game device.

According to a fifth aspect of the invention, there is provided a computer data signal embodied in a carrier wave and representing a sequence of instructions which, when executed by a processor, cause the processor to perform a method of providing a game item. The method comprises the steps of sending a request of addition of an item at a video game device, receiving the request of addition of the item at an item providing server connected to the video game device via a network, sending item update information which identifies a unusable item to be changed to a usable item in response to the request of addition of the item, at the item providing server, receiving the item update information at the video game device, and updating data used by a game program so as to be able to use the unusable item in a game based on the contents of the item update information, at the video game device.
Fig. 1 shows a block diagram of a video game device of an embodiment of the invention;
Fig. 2 shows a block diagram of a dependent type portable video game device of an embodiment of the invention;
Fig. 3 shows a block diagram of an independent type portable video game device of an embodiment of the invention;
Fig. 4 schematically shows a structure in a cassette of a video game device;
Fig. 5 shows a game item providing system according to the invention;
Fig. 6A shows an example of a game screen displayed when a user of the video game device issues a request of adding of an item of the game; and
Fig. 6B shows an example of a game screen displayed when the user of the video game device enters a cash card number.

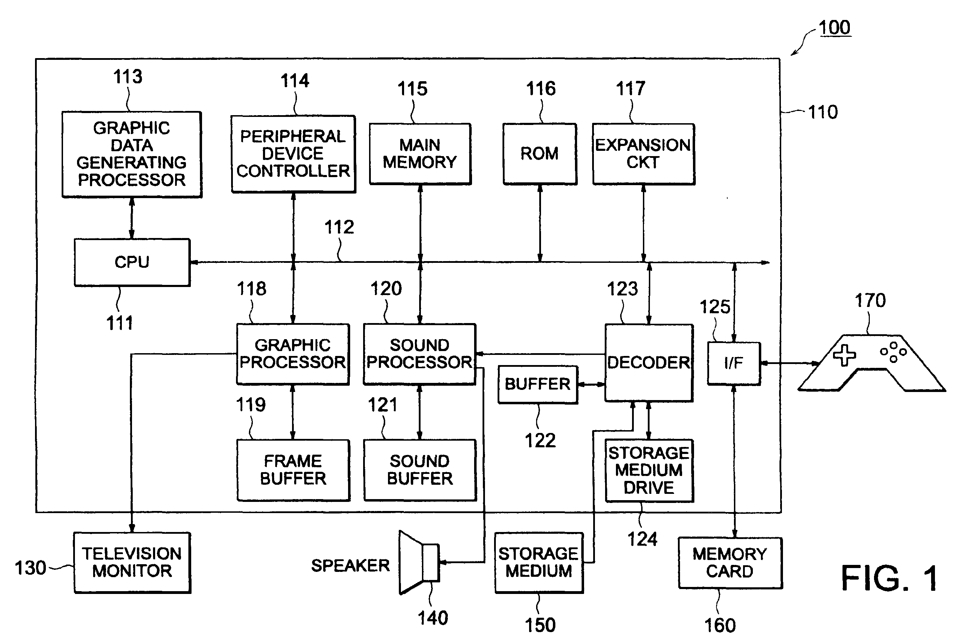

Referring to Fig. 1, description is at first made about a video game device for a home video game. As described above, there are various types of video game devices. Therefore, the video game device shown in Fig. 1 is merely exemplified and may be changed to any other game devices or machines.

The device shown in Fig. 1 is a device connected to the dependent type portable video game device.

The video game device shown in Fig. 1 includes a video game device body 110, a television monitor 130, a speaker 140, a storage medium 150, a memory card 160, and a controller 170. And the elements 130 to 170 are connected to the body 110.

The video game device body 110 includes a CPU 111, a bus 112 connected to the CPU 111, and some elements connected to the bus 112.

The bus 112 includes an address bus, a data bus, and a control bus. A graphic data generating processor 113, a peripheral device controller 114, a main memory 115, a ROM 116, an expansion circuit 117, a graphic processor 118, a frame buffer 119, a sound processor 120, a sound buffer 121, a decoder 123, a buffer 122, a storage medium drive 124, and an interface circuit 125 are connected to the bus 112.

The television monitor 130(hereinafter, referred to as a "monitor") is connected to the graphic processor 118. Further, the speaker 140 is connected to the sound processor 120, and the memory card 160 and the controller 170 are connected to the interface circuit 125.

As mentioned above, the video game device shown in Fig. 1 is an example suited for home use. In this case, it is general that the monitor of a home television is used as the monitor 130 and a speaker of the home television is used as the speaker 140.

In the case where the method according to the invention is applied to the arcade game device, the above mentioned elements shown in Fig. 1 may be all incorporated into a single body.

Also, when the method of the invention is used in a personal computer of a workstation, a CRT display connected to the personal computer may be used as the monitor 130, and an input device such as a keyboard or a mouse is used as the controller 170.

Then, description is made about the game device body 110 in more detail.

The CPU 111 is, for example, a 32-bits RISC (reduced instruction set computer), and controls all elements of the game device by executing an operating system program stored in a ROM 116, which is described later.

The graphic data generating processor 113 serves as a co-processor of the CPU 111. That is, the processor 113 executes calculation for coordinate transformation and a light source, for example, operation of fixed decimal or vector, with parallel processing to display a pseudo three-dimensional image.

The peripheral device controller 114 executes control operation for interruption, time, memory, and direct memory access (DMA) transfer. The ROM 116 stores, as described above, the operating system program which controls operations of the elements in the game device.

The expansion circuit 117 decodes still or animated image data read out from the storage medium 150 and stored in the main memory 115, under the control of the aforementioned CPU 111, and stores the decoded image data back in the main memory 115. Specifically, the expansion circuit 117 is capable of carrying out high-speed execution of inverse discrete cosine transform (inverse DCT) operations, and it is also capable of expanding compressed data read out from the storage medium 150 in accordance with still color image compression standards (known as JPEG) or cumulative media moving image encoding standards (known as MPEG).

The graphic processor 118 renders polygon images and stores them into the frame buffer 119 in response to instructions from the CPU 111.

The frame buffer 119 includes a display area and a non-display area. The display area is an area for storing images corresponding to a display area on the monitor 130. The non-display area is an area for storing animation images used to produce two-dimensional images in the display area and textures used to produce pseudo three-dimensional images.

In some case, the frame buffer 119 includes a color lookup table (CLUT) which corresponds a color of pixel to a number. Also, data in the display area in the frame buffer 119 are transferred to the monitor 130 at high-speed. The frame buffer 119 consists of a so-called dual-port RAM, and it is capable of simultaneously receiving images from the graphic data generating processor 113 (CPU 111) or transferring data from the main memory 115, and reading out data in order that the data can be displayed to the monitor 130.

The sound processor 120 outputs music or an effective sound via speaker 140 by regenerating ADPCM data in the storage medium 150 or voice data stored in the sound buffer 121, or by modulating and regenerating the voice data.

The decoder 123 decodes a program or data which are stored in the storage medium 150 and are appended an error correction code (ECC), and provides the program or the data to the main memory 115 or the sound processor 120.

The buffer 122 temporarily stores the program and/or data regenerated from the storage medium 150. The buffer 122 has a memory capacity of, for example, 32 kilobytes.

The storage medium drive 124 may be a DVD-ROM drive, a CD-ROM drive, an optical disk drive, or the like. The storage medium drive 124 reads a program and another data out of the storage medium 150, and provides them to the decoder 123.

The interface circuit 125 sends an operation signal received from the controller 170 to the CPU 111. Also, the interface circuit 125 reads out the contents of the memory card 160 to supply the contents to the main memory 115, and simultaneously stores data into the memory card 160 in response to an instruction of the CPU 111.

A storage medium 150 stores a game program (or a series of computer data signal) and image data required to play a game.

The game program includes a series of instructions and is loaded to the main memory 115. The instructions are interpreted and executed by the CPU 111 in order, a game is executed, that is, displaying images on the monitor and outputting a effective sound from the speaker 140. In the independent type portable video game device and dependent type portable video game device, a game is executed by similar method.

The image data are read from the storage medium 150 to a video game device via the storage medium drive 124. The storage medium itself is, for example, a DVD-ROM, a CD-ROM or an optical disk.

The memory card 160 stores values of a various of parameters in order to, for example, maintain the status at the time point when a game terminates last time. Herein, a card type memory is used as the memory card 160 in the illustrated example, but many types of memories may be used.

To store the value, the memory card 160 is inserted into a slot of the interface circuit 125.

As described later, the dependent type portable video game device is also inserted into the slot of the interface circuit 125, and a program and data in the video game body 110 are transmitted to the portable video game device.

The controller 170 is manipulated to play a game by a game player. The controller 170 includes direction buttons for moving a character on the monitor upwards, downwards, leftwards and rightwards, and a plurality of function buttons for instructing one of specific functions, for example, starting the game or selecting items.

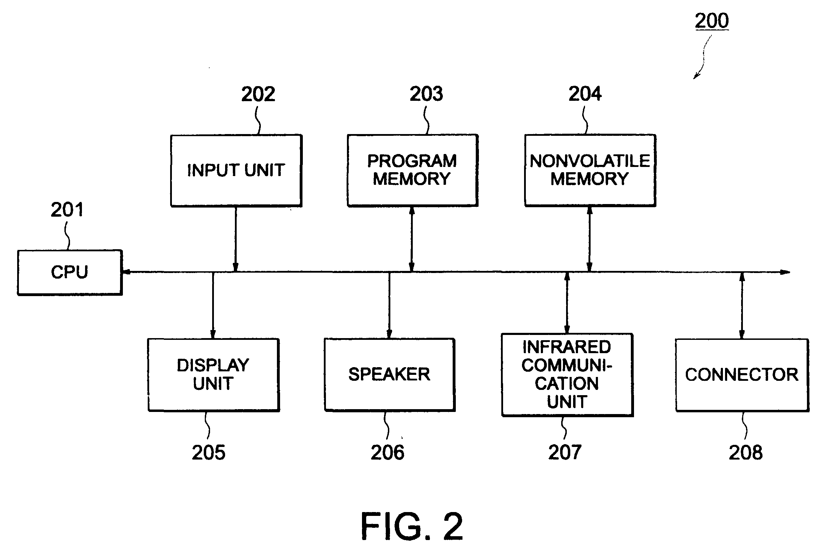

Next, a dependent type portable video game device will be explained using Fig. 2. This system is the same as the system disclosed in Japanese Laid Open Publication No. H11-7504 (namely, 7504/1999) "Memory Card Device, Video Game System," and substantially adds to the above-mentioned memory card 160 input device and display device required to play a game.

The dependent type portable video game device 200 comprises a CPU 201, an input device 202, a program memory 203, a nonvolatile memory 204, display device 205, a speaker 206, an infrared communication device 207, and a connector 208.

The CPU 201 controls the transmitting and receiving of data between each component element, executes a game program, and achieves infrared communications in accordance with program commands loaded into the program memory 203, which will be explained later.

The Input device 202 comprises a plurality of buttons in addition to a cross key, and a game player plays a game by pressing these buttons as needed. The program memory 203 is comprised, for example, of around 128 kilobytes of storage capacity, and the game program and required data which are temporarily stored in the program memory 203.

The nonvolatile memory 204 is comprised, for example, of around 2 kilobytes of capacity, and utilizes a semiconductor memory device, which, like a flash memory, retains the state that is stored even when the power is cut off. Further, because the video game device 200 comprises a battery (not shown in the figure), it is possible to use a static random access memory (SRAM) as the nonvolatile memory 204.

The main component elements of the above-mentioned memory card 160 are the same for this memory. A program and data received via either the connector 208 or the infrared communication device 207 are stored in the nonvolatile memory 204. The above-mentioned data, for example, might indicate the progress of a game, or might indicate the attributes or ability of a character that appears in a game.

The Display device 205 is a display device for displaying images of the game, and utilizes, for example, a liquid crystal display (LCD) device. The speaker 206 outputs sound either in accordance with the game, or in accordance with the operation of the dependent type portable video game device.

The infrared communication device 207 is a device for transmitting and receiving data via infrared communications with another portable video game device, for example. A program and data received via this communication device 207 using a prescribed protocol is stored in the nonvolatile memory 204 as described above, and thereafter, is provided to the program memory 203. Conversely, when data are transmitted via infrared communication device 207, a program in the program memory 203 fetches data from either in the program memory 203 or in the nonvolatile memory 204, and controls such that the data are transmitted using a prescribed protocol. In the present invention, it is sufficient that a signal from a remote controller can be received, and so long as this signal can be received, a method of communicating is not limited to infrared communication.

The idea behind the above-mentioned dependent type portable video game device 200 was to enable a program and required data to be fetched from the above-mentioned video game device body 110 so that a game can be played anywhere. Such the infrared communication function is added to this video game device 200 for the purpose of making full use of the portability thereof, and the present invention can be implemented by adding the infrared communication function to a video game device body 110, which is used inside a home.

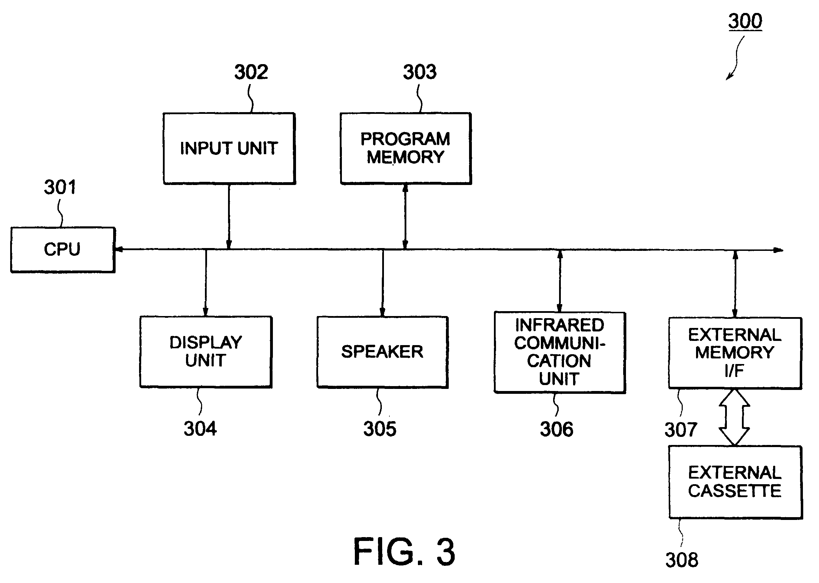

Next, a second embodiment of a video game device implemented by the present invention will be explained by referring to Fig. 3. This is equivalent to the above-mentioned independent type portable video game device, and by inserting into this system a cassette, which is specially prepared therefor, the device can play a game independently on its own. Further, this device is constituted the same as a system disclosed in Japanese Laid Open Publication No. H02-210562 (namely, 210562/1990) "Copy Prevention System for External Memory Unit."

The independent type portable video game device 300 comprises a CPU 301, an input device 302, a program memory 303, a display device 304, a speaker 305, an infrared communication device 306, an external memory interface 307, and an external cassette 308.

The CPU 301 controls the transmitting and receiving of data between each component element, executes a game program, and achieves infrared communications in accordance with program commands loaded into the program memory 303, which will be explained below.

The Input device 302 comprises a plurality of buttons in addition to a cross key, and a user play the game by pressing these buttons as needed. A game program and required data are loaded into the program memory 303 for playing the game, and the game program and the data are stored in the external cassette 308.

The display device 304 is a display device for displaying images of the game, and utilizes, for example, a liquid crystal display (LCD) device. The speaker 305 outputs sound either in accordance with the game, or in accordance with the operation of the independent type portable video game device.

The infrared communication device 306 is a device for transmitting and receiving data via infrared communications with another portable video game device, for example. Data received via this device using a prescribed protocol is processed by a program loaded in the program memory 303. Conversely, when data is transmitted via infrared communication device 306, this program fetches data from either in the program memory 303 or from another area, and controls such that the data are transmitted using a prescribed protocol.

The external memory interface 307 operates so as to enable access to a program and data in the external cassette 308 at all times. Whereas the above-mentioned dependent type portable video game device is unable to execute a game until after a program and required data have been downloaded collectively from the video game device body, this independent type portable video game device 300, when the external cassette 308 is mounted as-is, accesses this cassette at any time during a game, and treats this cassette as a portion of the video game device.

A game program, and data used in this game are stored in external cassette 308. This cassette is ordinarily sold for each game, and it is possible to switch to a game that is easily executed on the video game device 300 by exchanging cassette 308 for a different one. Further, data received via infrared communication device 306, or data created by a program can also be stored in cassette 308. The above-mentioned data, for example, might indicate the progress of the game, or might indicate the attributes or capabilities of a character in the game.

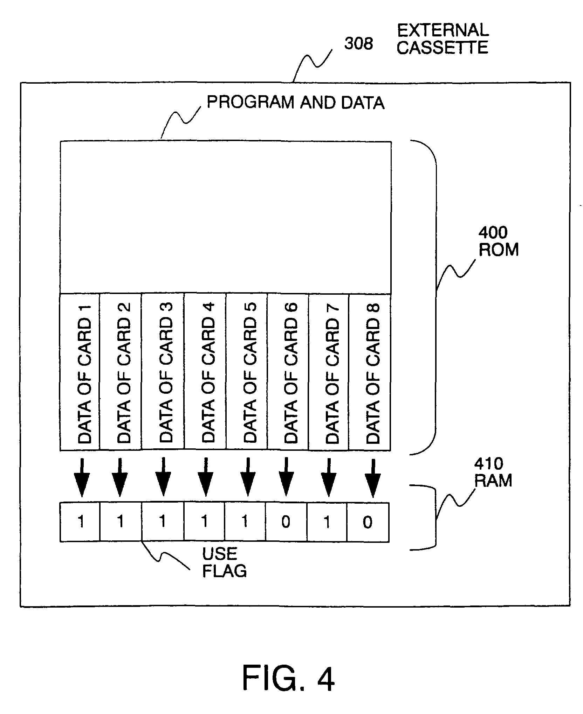

Next, description is made about an internal structure of the cassette 308 with reference to Fig. 4. The cassette 308 includes a ROM 400 and a RAM 410. In the ROM 400, a program for executing a game and a part of data used by the program are stored when the cassette 308 is produced. In the RAM 410, a part of the data which are used by the program and are updated in the game are stored. The RAM 410 consists of a random access memory. Data are written into the random access memory and the data are read from the random access memory.

Fig. 4 also illustrates contents of data in a card game. But, a game item providing system and its method according to the invention can be applied to any other games.

In the card game, card information data are stored in the ROM 400 for each card (card 1 - card 8, in Fig. 4). Each of the card information data represents a design, an attribute, and an ability of a card. The game program displays these cards on a monitor by using the corresponding card information data. Therefore, the ROM 400 is referred to as "an information storing area".

On the other hand, the RAM 410 is divided into some areas each of which corresponds to a card stored in the RAM 400. In each area, a "flag" is stored and a value of the flag represents whether or not the corresponding card is usable in a game.

In this example, when the item (card) is usable, a value of the flag is set to "one", and when the card is unusable, the value of the flag is set to "zero". Therefore, the flag is referred to as a use flag.

When the value of the use flag in an area is "zero", an item (card) corresponding to the area can not be used in the game, and therefore, the item is not displayed on a display device in any scene of the game. This means that the card is not in condition to be used in the game.

On the other hand, when the value of the use flag in an area is "one", an item (card) corresponding to the area can be displayed on a display device and used in the game. In the example shown in Fig. 4, since a use flag having a value "zero" is stored in areas corresponding to a card 6 and a card 8, the card 6 and the card 8 can not be used in the game at this time.

Herein, when the values of the use flags are changed from "zero" to "one", the card 6 and the card 8 can be used in response to a user's instruction. As described above, even if there are cards which are unusable in the beginning of the game, card designs to be displayed on a display device and data including attributes and abilities of the cards are stored in the ROM 400 in advance. Such the beforehand storing is done because the above information can not be added later due to a restriction of a storage volume of the RAM 410.

In Fig. 4, the card information data of a card in the ROM 400 are related to an area, in the RAM 410, including a use flag corresponding to the card, by storing the card information data and the corresponding areas in the same order for each card. However, the card information data may be related to the area in the RAM 410 by many other methods, for example, by storing an address of the corresponding area into the card information data.

In the dependent type portable video game device as shown in Fig. 2, card designs used when a card is displayed on a display device and data representing an attribute and an ability of the card are, in general, loaded in the program memory 203. The use flag is stored in the nonvolatile memory 204 in the form of the same style as described above.

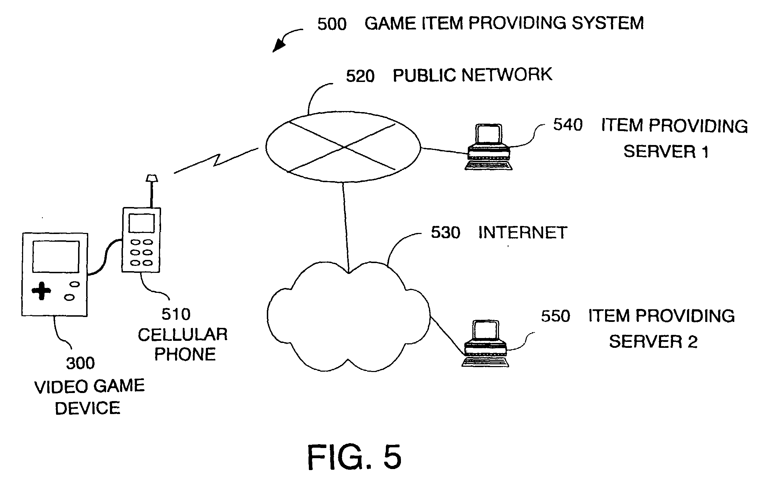

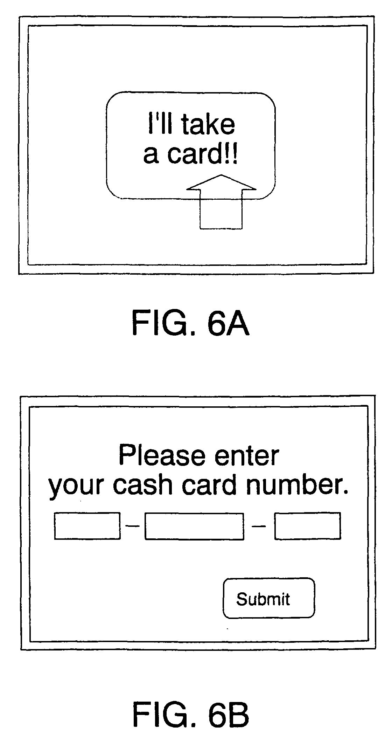

Next, description is made about a method of supplying a new item in a video game device according to a game item providing system of the invention, with reference to Figs. 5 and 6.

The game item providing system 500 shown in Fig. 5 includes an independent type portable video game device 300, a cellular phone 510, a public network 520, the internet 530, an item providing server 1 (540), and an item providing server 2 (550).

The independent type portable video game device 300 communicates with the item providing server 1 or the item providing server 2, by connecting to the public network 520 or the internet 530 via the cellular phone 510. Then the device 300 obtains a new item (herein, a new card in a card game) from the server 1 or the server 2.

In Fig. 5, the independent type portable video game device 300 is used, but the other types of video game device, such as the dependent type portable video game device 200 shown in Fig. 2 can be used. When the dependent type portable video game device 200 is used in the game item providing system 500, the device 200 is also connected to the public network 520 or the internet 530 via the cellular phone 510 as shown in Fig. 5. In addition, the device 200 can be connected to the public network 520 or the internet 530 via the video game body 110 having a telephone line connecting function and an Internet connecting function, such as a modem.

Also, the video game device 200 can be used for another game by copying a changed value of the use flag to another memory card. And the video game device 200 can be used for playing the original game again by copying back the changed value of the use flag from the memory card.

Other device may be used as the cellular phone 510, as far as it can be connected to the video game device 300 and the public network 520 ( or the Internet 530). For example, the other phone device or a personal computer with a modem may be used.

The item providing server 1 (540) is connected to the public network 520 via a modem, and sends a new card adding instruction to the video game device 300 as item update information, in response to a request of adding of a card from the video game device 300.

The new card adding instruction which is sent from the item providing server 1 (540) to the video game device 300, changes a value of a use flag from "zero" to "one" as described above. In this example, only address information of the use flag to be changed is sent as the item update information from the server 1 to the video game device 300, since information of a card design, an attribute, and an ability of the card is stored in the video game device 300 in advance.

The item providing server 2 (550) substantially performs similar functions to the item providing server 1 (540), but the server 2 is connected to the Internet 530. Herein, the video game device 300 is connected to the server 2 (550) via the cellular phone 510, the public network 520, and an Internet provider's server (not shown) connected to the public network 520.

In Fig. 6A, a screen is displayed which is used when a user issues the new card adding instruction. The user can foster displaying of the screen, by manipulating a cross key or other buttons of the video game device 300. If the user wants to get a new card, he/she selects an area on which words "I'll take a card" are displayed, by using a button. Then, the video game device 300 automatically connects the public network 520 via the cellar phone 510 and downloads a new card from the item providing server 1 or the item providing server 2.

For the user, it seems that a new card itself (design, attribute, and ability) is downloaded, but, as described above, only address information of use flag to be changed is downloaded.

When such the new card addition is charged, after the selection using the screen as shown in Fig. 6A, a cash card number input screen is displayed on a display device as shown in Fig. 6B. The user enters a user's cash card number to input areas in the screen and selects a submit button. Then, a new card is downloaded for the payment.

The inputting of the cash card number, a security function, a checking of the cash card number, and a settlement of the cash card are each controlled based on a known method. Also, an electric money, such as a kind of a prepaid card may be used.

GUI described with reference to Fig. 6 can be configured to exchange data between the video game device 300 and the item providing server 1 or 2, by using a screen displaying method and protocol specific to the video game device. Also, the video game device can be configured to include a kind of WEB browser and the item providing servers 1 and 2 can be configured as WEB servers, and then data can be exchanged between the video game device and the item providing servers 1 and 2 by using a known protocol such as an HTTP protocol.

Also, a card in which a value of the corresponding use flag is "zero", that is, a unusable card is generally known by the item providing servers 1 and 2 in advance. When the new card adding instruction is issued, at the item providing server 1 or 2, a card is "randomly" selected among cards each of which has the corresponding use flag of "zero", and a value of a use flag corresponding to the selected card is changed to "one".

However, control can be made to select a specific unusable card based on a season or time when the new card adding instruction is issued, or a serial number of the video game device 300.

Finally, description is made about a series of processes from when the user issues the new card adding instruction to when the item update information is sent from the item providing server 1.

First of all, the user connects the video game device 300 to the cellular phone 510 by using, for example, a cable. Then, the user instructs the video game device to display the screen as shown in Fig. 6A and selects the area on which words "I'll take a card" are displayed to obtain a new card.

In the case where communication is made by using HTTP protocol, it is required to access the item providing server to receive data used to display the screens shown in Figs. 6A and 6B. But, herein, it is assumed that the data of the screens and related programs are already stored in the video game device 300.

Next, the user enters his/her a cash card number to pay for the new card and pushes the submit button when the screen shown in Fig. 6B is displayed after the selection of the area in the screen shown in Fig. 6A.

The video game device 300 automatically connects the item providing server 1 via the cellular phone 510 and the public network 520, and sends a new card adding instruction to the server 1 in response to the pushing of the button.

The item providing server 1 selects a card among cards which are unusable in the card game, randomly (or based on predetermined conditions), when the server 1 receives the new card adding instruction from the video game device 300. Then, the server 1 determines an address where a use flag corresponding to the selected card is stored in a cassette of the card game (RAM 410). When the address is determined, the server 1 sends item update information including the determined address to the video game device 300 via the public network 520.

When the video game device 300 receives the item update information, the device 300 reads the address of the use flag from the item update information, and changes a value of the use flag corresponding to the address from "zero" to "one".

Then, the video game device 300 disconnect the connection to the public network 520.

Thus, a game program loaded into the video game device 300 recognizes a card corresponding to the changed use flag as a usable card, as a result, the video game device 300 can use the new card in the card game.

As described above, description has been made about a system of providing a card according to the invention in connection with a new card adding operation in the card game. However, the providing system according to the invention can be applied to other games or applications. For example, the system is used to add a new character in a combat game or a sports simulation game. The system can be used for all games in which there is a possibility for adding a new item during a game.

Also, in the above mentioned example, an address of a cassette (RAM 410) is sent or received as item update information, thereby a unusable item is changed to a usable item. However, all data including a card design, an attribute, and an ability of a card can be sent or received as the item update information.

According to the invention, an item of a game executed in a user's video game device can be easily added by user's instruction from the video game device.

Further, it is capable of controlling that the addition of the item is done only when the user pays for the item.

Still further, the added item is randomly selected or selected based on some condition, for example, a season or a time of adding the item, or a serial number of the video game device.

## Claims

1. A game item providing system (500) comprising:
a video game device (300) which sends a request of addition of an item used in a game in response to an operation of a user;
a memory unit (308) which stores a program and data used in the game and which is held by the video game device (300); and
an item providing server (540, 550) which receives the request of addition of an item from the video game device (300) and sends to the video game device (300) item update information identifying a unusable item to be changed to a usable item.

2. The game item providing system (500) of claim 1, wherein the memory unit (308) comprises an information storing area which stores information required to use an item in the game as a part of the data, and a flag storing area which stores flags, as another part of the data, each of which corresponds to an item and has a value representing whether the corresponding item is usable in the game or not, and wherein the video game device (300) comprises a flag update unit which changes a value of a flag to a value representing that the corresponding item is usable in the game, according to the contents of the item update information.

3. The system of claim 1 or 2, wherein the
request from the video game device (300) and the item update information from the item providing server (540, 550) are sent via a public network (520), the Internet (530), or a combination of the public network (520) and the Internet (530).

4. The game item providing system (500) of claim 3, wherein the video game device (300) is connected to the public network (520), the Internet (530), or the combination of the public network (520) and the Internet (530), via a cellular phone (510).

5. The system of claim 1, 2, 3 or 4, wherein the item
update information is sent when the user of the video game device (300) pays for the addition of the item.

6. The system of claim 1, 2, 3, 4 or 5, wherein the
unusable item to be changed to the usable item is randomly selected or is selected based on a season or a time when the item update information is sent, or an identification number of the video game device (300).

7. The system of claim 1, 2, 3, 4, 5 or 6, wherein each
item corresponds to a card and the game executed in the video game device (300) is a card game.

8. A video game device (300) comprising:
a memory unit (308) which stores a program and data of a game;
an item request unit which sends a request of addition of an item used in the game;
an item information receiving unit which receives item update information which is sent in response to the request of addition of the item and identifies a unusable item to be changed to a usable item; and
a data update unit which changes the unusable item identified by the item update information to the usable item.

9. The video game device (300) of claim 8, wherein the memory unit (308) comprises an information storing area which stores information required to use an item in the game as a part of the data, and a flag storing area which stores flags, as another part of the data, each of which corresponds to an item and has a value representing whether the corresponding item can be used in the game or not, and wherein the data update unit changes a value of the flag identified by the item update information to a value representing that the corresponding item is usable in the game.

10. The device of claim 8 or 9, wherein each item
corresponds to a card and the game executed in the video game device (300) is a card game.

11. An item providing server (540, 550) comprising:
an item request receiving unit which receives a request of addition of an item used in a game; and
an item information sending unit which sends item update information which identifies a unusable item to be changed to a usable item, in response to the request of addition of the item.

12. The item providing server (540, 550) of claim 11, wherein each item corresponds to a card and the game executed in the video game device (300) is a card game.

13. A game item providing method comprising the steps of:
sending a request of addition of an item used in a game at a video game device (300);
receiving the request of addition of the item at an item providing server (540, 550) connected to the video game device (300) via a network (520, 530);
sending item update information which identifies a unusable item to be changed to a usable item in response to the request of addition of the item, at the item providing server (540, 550);
receiving the item update information at the video game device (300); and
updating data used by a game program so as to be able to use the unusable item in the game based on the contents of the item update information, at the video game device (300).

14. The game item providing method of claim 13, wherein the data includes information required to use the items in the game and flags identifying the unusable items with the usable items, and the updating step changes one of the unusable item to the usable item by updating one of the flags according to the item update information.

15. A computer data signal embodied in a carrier wave and
representing a sequence of instructions which, when executed by a processor, cause the processor to perform a method of providing a game item, the method comprising the steps of:
sending a request of addition of an item at a video game device (300);
receiving the request of addition of the item at an item providing server (540, 550) connected to the video game device (300) via a network (520, 530);
sending item update information which identifies a unusable item to be changed to a usable item in response to the request of addition of the item, at the item providing server (640, 550);
receiving the item update information at the video game device (300); and
updating data used by a game program so as to be able to use the unusable item in a game based on the contents of the item update information, at the video game device (300).
